# EUROPEAN PATENT APPLICATION

(11) **EP 0 570 078 A1**
(43) Date of publication of application: **18.11.1993**
(21) Application number: 93201380.8
(22) Date of filing: 14.05.1993
(51) Int. Cl.: C08L 67/02

(54) **Polyester compositions with high crystallization rate**

(30) Priority: 15.05.1992 IT MI921165
(71) Applicant: ENICHEM S.p.A., I-20124 Milano (IT)
(72) Inventor: Canova, Luciano, I-28100 Novara (IT); Proto, Antonio, I-28100 Novara (IT); Vigliarolo, Diego, I-20017 Rho (IT); Garbassi, Fabio, I-28100 Novara (IT)
(74) Representative: Appoloni, Romano

(57) **Abstract**

High crystallization speed polyester compositions comprising:
(a) 95-99.5% by weight of a polyester resin obtained by polymerizing a dicarboxy aromatic acid with a C₂-C₄ glycol, and
(b) 0.5-5% by weight of a nucleating agent constituted by an imidized acrylic polymer or copolymer.

## Description

The present invention relates to polyester compositions displaying a high crystallization rate.

More particularly, the present invention relates to linear polyester based compositions which, by being characterized by a high crystallization rate, are particularly suitable for injection moulding.

Saturated linear thermoplastic polyesters, such as poly(ethylene terephthalate), its copolymers or blends, are relatively cheap products manufactured on large commercial scale which, in their crystal state, display excellent physical and mechanical properties consistently with their high melting point.

However, formulations based on said polyesters are not widely used in injection moulding, mainly owing to the difficulty met in obtaining, with the traditional moulds, properly crystallized articles.

When it does not contain additives, poly(ethylene terephthalate) (PET), crystallizes very slowly from its molten state, producing articles having a crystalline structure of non-homogeneous spherulitic type, with low impact strength and rough surface. Its processing require high moulding temperatures and, in order to obtain dimensionally stable pieces, long mould stay times are necessary. In fact, early demoulding a not crystallized enough piece may mean that said piece will later on undergo further crystallization phenomena over time, with volume changes and possible distorsions of the shape of said piece consequently occurring.

Poly(ethylene terephthalate) based moulding compositions are known which contain crystallization rate accelerating substances, generally known as "nucleating agents". Such a type of compositions are disclosed, e.g., in European Patent Applications published with Nos. 21,648 25,573; and 31,201; or in U.S. Patents Nos. 3,516,957; 3,761,450 and 4,212,791.

The present Applicant has found now that crystallization temperature and rate of polyester resins can be increased by using a novel nucleating agent which was never described in literature before and which is constituted by an imidized acrylic polymer.

Therefore, the subject-matter of the present invention are the high crystallization rate polyester compositions comprising:
(a) 95-99.5% by weight of a polyester resin obtained by condensing a dicarboxy aromatic acid with a C₂-C₄ alkylene glycol, and
(b) 0.5-5% by weight of at least one nucleating agent, deriving from a polymer or copolymer of a C₁-C₄ ester of (meth)acrylic acid, essentially constituted by the repeating unit of general formula (I): 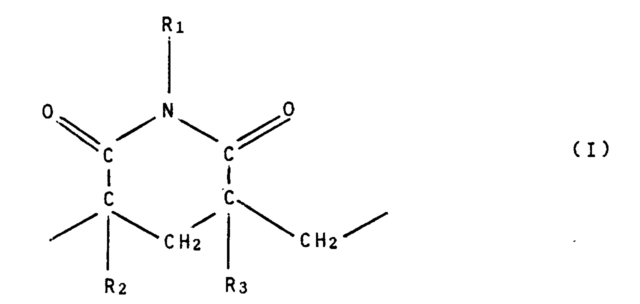 wherein:
   - R₁: represents an aromatic radical, optionally substituted with C₁-C₄ alkyl radicals, containing from 6 to 18 carbon atoms,
   - R₂ and R₃: which may be the same or different from each other, represent a hydrogen atom or a methyl radical.

By the expression "(meth)acrylic acid", as it is used in the instant disclosure and in the appended claims, either acrylic or methacrylic acid are understood.

Preferred compositions according to the present invention are those in which the polyester resins are obtained from terephthalic acid, isophthalic acid, 2,6-naphthalene dicarboxy acid, and so forth, and ethylene glycol or butylene glycol.

Examples of polyester resins are those which are presently available on the market as poly(ethylene terephthalate), poly(butylene terephthalate), poly(ethylene naphtalate, and so forth.

The nucleating agent is an imidized (meth)acrylic polymer or copolymer, or N-aryl polyglutarimide, and besides the repeating unit of type (I), is also characterized by unreacted residues of units of acrylic type, such as: 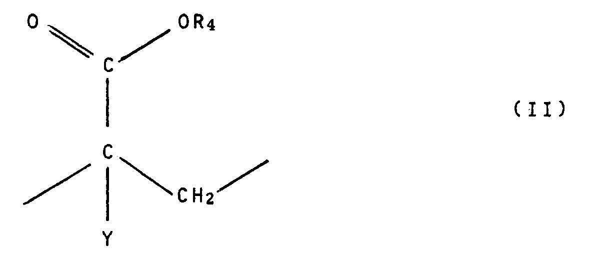
and/or 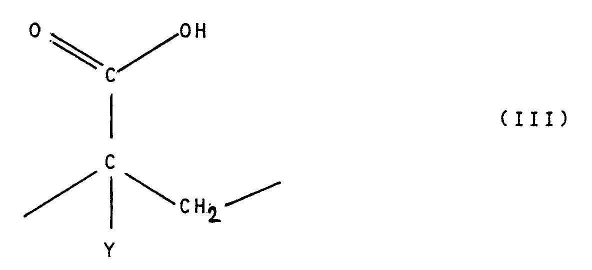
wherein Y stands for R₂ or R₃, and R₄ is C₁-C₄ alkyl. The nitrogen content is comprised within the range of from 0.5 to 6% by weight.

The repeating unit (I) of the nucleating agent was evidenced by infrared (I.R.) spectroscopy, using the band at approximately 1,680 cm-¹, which can be assigned to the vibrations of carbonyl moieties of the imidic ring.

The nucleating agents used in the compositions according to the present invention may be prepared by reacting a polymer or copolymer of a C₁-C₄ ester of (meth)acrylic acid having an intrinsic viscosity, as measured in tetrahydrofuran at 30°C, higher than 0.05 dl/g, and preferably comprised within the range of from 0.1 to 3 dl/g, with an N-aryl substituted amide of general formula (IV):

X-Z-NHR₁ (IV)

wherein:
- R₁: has the same meaning as cited hereinabove,
- Z: represents a CO or SO₂ radical, and
- X: represents a hydrogen atom or an alkyl, cycloalkyl, aryl, alkylaryl, arylalkyl radical containing from 1 to 12 carbon atoms.

The reaction is carried out at a high temperature, generally higher than 100°C and preferably comprised within the range of from 150 to 300°C, either in bulk or in a solvent. In the latter case, the solvent is selected from those high boiling solvents which are capable of dissolving both the polymer as such, and the polymer in its imidized form.

The molar ratio of (meth)acrylic polymer or copolymer to the amide is higher than 1.5, and preferably is comprised within the range of from 1.5 to 2.

The (meth)acrylic polymer or copolymer used in order to prepare the nucleating agent of the present finding is obtained by polymerizing the C₁-C₄ esters of acrylic or methacrylic acid, optionally in the presence of 0-10% by weight of said acids. Examples of said esters are: methyl methacrylate, ethyl methacrylate, isopropyl methacrylate, butyl methacrylate, methyl acrylate, ethyl acrylate, isopropyl acrylate, and so forth.

Examples of amides of general formula (IV) are: N-phenyl formamide or formanilide, N-phenyl acetamide, N-phenyl propionamide, N-phenyl benzamide, and so forth.

The so obtained (meth)acrylic polymers or copolymers display a glass transition temperature T_{g} higher than 130°C.

A process for preparing the fast crystallization rate polyester compositions according to the present invention comprises:
(i ) blending, at room temperature, a polyester resin, obtained from the condensation of a dicarboxy aromatic acid and a C₂-C₄ alkylene glycol, with at least one nucleating agent deriving from a polymer or copolymer of a C₁-C₄ ester of (meth)acrylic acid and essentially constituted by the repeating unit of general formula (I);
(ii) heating the resulting blend at a high temperature, with continuous stirring; and
(iii) cooling the end composition down to room temperature.

The operation of step (ii) preferably takes place at temperatures at which both the polyester resin and the nucleating agent are in the molten state, for example, within the range of from 250 to 330°C.

According to a preferred embodiment of the present process, both the cold and high-temperature blending steps (i) and (ii), and the cooling step (iii) can be accomplished with one single apparatus, for example an extruder equipped with a pelletizer head.

In order to obtain a better dispersion of the nucleating agent in the polyester resin, an alternative process can be carried out which implies that a masterbatch containing nucleating agent concentrations higher than 5% by weight is prepared by operating under molten mass conditions.

The polyester compositions according to the present invention are well suitable for use in order to obtain fabricated bodies which can be prepared by means of the normal fabrication technologies for thermoplastic polymers, such as, e.g., injection moulding, extrusion of sheets or profiles or thermoforming, can be used as matrices for composite materials based on inorganic fillers and/or fibres, and can be used in mixture with other polymers.

In order to better understand the present invention and to practice it, in the following some illustrative, non-limitative examples are reported.

### Example 1

A glass, 4-necked reactor of 1 litre of capacity is evacuated after being repeatedly purged with nitrogen.

To the reactor, 46.7 g of methyl methacrylate, 1.4 g of methyl acrylate, 0.9 g of azobis(isobutyronitrile), 0.88 g of dodecyl mercaptan and 28.14 g of formanilide are charged.

The resulting reaction mixture is heated up to 60°C, and is kept at this temperature, with stirring, for 3 hours. The temperature is then increased up to 250°C and is kept at that value for 3 hours.

The reaction product is cooled to 50°C and 150 ml of tetrahydrofuran (THF) is added and the resulting solution is poured into 3 litres of ethanol kept with strong stirring.

37 g is obtained of a polymer having an intrinsic viscosity, as measured in THF at 30°C, of 0.14 dl/g, and a nitrogen content of 2.7%.

The glass transition temperature of the polymer is of 150°C.

5 g of nucleating polymer is mixed with 495 g of PET having an intrinsic viscosity, as measured in 60/40 phenol/tetrachloroethane at 30°C, of 0.6 dl/g. This PET grade is manufactured by Enichem Fibre of Milan and is characterized by a melting temperature of 252°C and a crystallization temperature of 177°C.

The mixture was extruded by means of a single screw extruder of 19 mm of diameter and a screw with a length/diameter ratio of 25:1. The revolution rate of the screw was of 70 rpm, the temperature profile ranged from 250 to 280°C, at the loading hopper, and at the extrusion head, respectively. At die outlet, the extrudate was cooled with water and then pelletized.

The resulting product has an intrinsic viscosity of 0.58 dl/g and a crystallization temperature of 200°C.

The crystallization temperatures of both the starting PET and nucleated PET were measured by differential scanning calorimetry, with a cooling rate of 20°C/minute.

## Claims

1. Polyester compositions with a high crystallization rate, comprising:
(a) 95-99.5% by weight of a polyester resin obtained by condensing a dicarboxy aromatic acid with a C₂-C₄ alkylene glycol, and
(b) 0.5-5% by weight of at least one nucleating agent, deriving from a polymer or copolymer of a C₁-C₄ ester of (meth)acrylic acid, essentially constituted by the repeating unit of general formula (I): 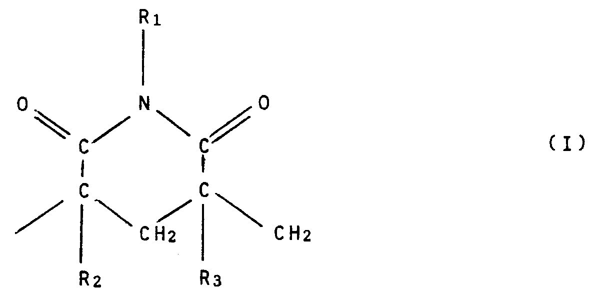 wherein:
R₁ represents an aromatic radical, optionally substituted with C₁-C₄ alkyl radicals, containing from 6 to 18 carbon atoms,
R₂ and R₃ which may be the same or different from each other, represent a hydrogen atom or a methyl radical.

2. Polyester compositions according to claim 1, in which the polyester resins are obtained from terephthalic acid, isophthalic acid, 2,6-naphthalene dicarboxy acid, and from ethylene glycol or butylene glycol.

3. Polyester composition according to claim 1 or 2, in which the repeating unit of general formula (I) is present, in the nucleating agent, in such amounts as to yield a nitrogen content comprised within the range of from 0.5 to 6% by weight.

4. Polyester compositions according to any of the preceding claims, in which the nucleating agents are prepared by reacting a (meth)acrylic polymer or copolymer having an intrinsic viscosity, as measured in tetrahydrofuran at 30°C, higher than 0.05 dl/g, with an N-aryl substituted amide of general formula (IV):
X-Z-NHR₁ (IV)
wherein:
R₁ has the same meaning as cited hereinabove,
Z represents a CO or SO₂ radical, and
X represents a hydrogen atom or an alkyl, cycloalkyl, aryl, alkylaryl, arylalkyl radical containing from 1 to 12 carbon atoms.

5. Polyester compositions according to claim 4, in which the reaction of preparation of the nucleating agent is carried out at a higher temperature than 100°C, with a molar ratio of (meth)acrylic polymer or copolymer to the amide higher than 1.5.

6. Process for preparing the polyester compositions according to any of the preceding claims, which comprises:
(i) blending, at room temperature, a polyester resin, obtained from the condensation of a dicarboxy aromatic acid and a C₂-C₄ alkylene glycol, with at least one nucleating agent deriving from a polymer or copolymer of a C₁-C₄ ester of (meth)acrylic acid and essentially constituted by the repeating unit of general formula (I);
(ii) heating the resulting blend at a high temperature, with continuous stirring; and
(iii) cooling the end composition down to room temperature.

7. Process according to claim 6, in which the operation of step (ii) preferably takes place at temperatures at which both the polyester resin and the nucleating agent are in the molten state.

8. Process according to claim 6 or 7, in which the steps (i)-(iii) are carried out in an extruder equipped with a pelletizer head.

9. Use of the polyester compositions according to any of the preceding claims, in order to obtain fabricated bodies which can be prepared according to the normal technologies for thermoplastic polymer fabrication.
